# DEMANDE DE BREVET EUROPEEN

(11) **EP 0 558 398 A1**
(43) Date de publication de la demande: **01.09.1993**
(21) Numéro de dépôt: 93400458.1
(22) Date de dépôt: 23.02.1993
(51) Int. Cl.: G01B 11/14

(54) **Procédé optique de détermination de positions relatives de deux pièces et dispositif pour sa mise en oeuvre**

(30) Priorité: 28.02.1992 FR 9202397
(71) Demandeur: FRANCE TELECOM, F-75015 Paris (FR)
(72) Inventeur: Vareille, Aimé, F-38130 Echirolles (FR); Schiltz, André, F-38330 Saint-Ismier (FR); Hauuy, Jean-Claude, F-38190 Crolles (FR)
(74) Mandataire: Casalonga, Axel

(57) **Abrégé**

Procédé optique de détermination de l'écart latéral de deux pièces (1, 2) présentant des bords adjacents (3, 4) formant une fente (5), consistant à émettre au travers d'au moins une zone de ladite fente, par un côté de cette dernière, un faisceau de lumière parallèle (8); à capter le faisceau (8a) traversant cette zone de ladite fente par l'autre côté de cette dernière; et à comparer l'intensité lumineuse de ce faisceau traversant ladite zone à une valeur déterminée de manière à obtenir ou fournir l'écart entre les bords desdites pièces dans ladite zone. Ce procédé peut être appliqué au positionnement d'une première pièce telle qu'une puce en face ou dans une ouverture ménagée d'une seconde pièce telle qu'un substrat, et consister à déplacer ladite première pièce pour l'amener au-dessus de l'ouverture de la deuxième pièce, à comparer au fur et à mesure du déplacement de la première pièce l'intensité lumineuse traversant la fente séparant lesdites pièces, et à stopper le mouvement de la première pièce lorsque l'intensité du faisceau lumineux traversant est égale à une valeur déterminée.

## Description

La présente invention concerne un procédé optique de détermination de positions relatives de deux pièces et un dispositif pour la mise en oeuvre de ce procédé.

Une des techniques de réalisation de circuits hybrides consiste à insérer une ou plusieurs puces dans un orifice traversant réalisé dans un substrat qui porte un réseau d'interconnexion auquel on relie les plots de connexion des puces par des ponts. Cette technique nécessite cependant que les bords des puces soient disposés avec précision par rapport aux parois de l'orifice précité.

La présente invention propose une solution simple pour déterminer l'écart entre deux pièces en vue en particulier de les disposer l'une par rapport à l'autre, qui peut avantageusement être utilisée pour résoudre le problème précité de positionnement d'une puce dans une ouverture d'un substrat.

La présente invention concerne, selon un premier objet, un procédé optique de détermination de l'écart latéral de deux pièces présentant des bords adjacents formant une fente.

Selon l'invention, ce procédé consiste à émettre au travers d'au moins une zone de ladite fente, par un côté de cette dernière, un faisceau de lumière parallèle, à capter le faisceau traversant cette zone de ladite fente par l'autre côté de cette dernière, et à comparer l'intensité lumineuse de ce faisceau traversant ladite zone à une valeur déterminée de manière à obtenir ou fournir l'écart entre les bords desdites pièces dans ladite zone.

Selon l'invention, le procédé peut avantageusement consister à déplacer lesdites pièces l'une par rapport à l'autre jusqu'à ce que l'intensité lumineuse du faisceau traversant précité soit dans un rapport déterminé avec la valeur déterminée précitée.

Selon l'invention, le procédé peut avantageusement consister à comparer l'intensité lumineuse des faisceaux traversant deux zones de ladite fente et à déplacer lesdites pièces l'une par rapport à l'autre de telle sorte que le faisceau traversant ces deux zones soit dans un rapport déterminé.

La présente invention concerne également selon un autre objet, un procédé optique de positionnement d'une première pièce en face ou dans une ouverture ménagée dans une seconde pièce. Selon l'invention, ce procédé consiste à émettre un faisceau de lumière parallèle au travers de ladite ouverture de la deuxième pièce et couvrant cette ouverture, à capter le faisceau traversant ladite ouverture, à déplacer lesdites pièces l'une par rapport à l'autre de manière à amener la première pièce au-dessus de l'ouverture de la deuxième pièce, à comparer au fur et à mesure de ce déplacement l'intensité lumineuse traversant la fente séparant lesdites pièces, et à stopper ce déplacement lorsque l'intensité du faisceau lumineux traversant est égal à une valeur déterminée.

Selon l'invention, le procédé peut avantageusement consister à stopper le déplacement précité lorsque l'intensité du faisceau lumineux traversant atteint une valeur minimum.

Dans une variante, le procédé peut consister, dans une étape ultérieure, à engager la première pièce dans l'ouverture de la deuxième pièce.

Selon l'invention, la position de la première pièce par rapport à la deuxième pièce est de préférence réalisée en mettant en oeuvre le procédé précité concernant le réglage des bords de deux pièces.

De préférence, le procédé consiste à sélectionner au moins une zone, de préférence deux, dans des portions opposées de la fente séparant la première et la seconde pièce.

Selon l'invention, le faisceau de lumière parallèle est émis de préférence parallèlement à l'axe de ladite ouverture.

Dans une exécution préférée de l'invention, le procédé consiste à effectuer les comparaisons précitées par comptage de pixels, dont les signaux respectifs assOciés sont supérieurs ou inférieurs à une valeur déterminée, issus de l'image du faisceau traversant précité captée et numérisée, les comparaisons étant effectuées au fur et à mesure des déplacements successifs desdites pièces l'une par rapport à l'autre.

Dans une application particulière, le procédé selon l'invention convient, à l'insertion d'au moins une puce dans une ouverture ménagée dans un substrat.

La présente invention concerne également un dispositif pour la mise en oeuvre du procédé précité qui comprend des moyens pour émettre un faisceau de lumière parallèle, des moyens pour capter le faisceau traversant précité, des moyens de comparaison du signal d'intensité lumineuse de ce faisceau traversant à une valeur déterminée.

Selon l'invention, lesdits moyens pour capter le faisceau traversant comprennent de préférence une caméra présentant des moyens pour numériser l'image captée et lesdits moyens de comparaison comprennent des moyens de sélection de pixels et de comptage des pixels dont le signal associé est supérieur ou inférieur à une valeur déterminée.

La présente invention sera mieux comprise à l'étude d'un dispositif optique de détermination de positions relatives de pièces et de ses différents modes d'utilisation, décrits à titre d'exemples non limitatifs et illustrés par le dessin sur lequel :
- la figure 1 représente schématiquement un dispositif optique de détermination de position selon l'invention de deux parties adjacentes ;
- la figure 2 représente une vue de dessus de ces pièces;
- les figures 3 à 10 représentent les différentes étapes en vue de l'insertion d'une puce dans un subtrat, mettant en oeuvre le dispositif précité de l'invention, les figures 3, 5, 7 et 10 représentant les pièces en coupe verticale et les figures 4, 6, 8 et 9 les représentant en vue de dessus.

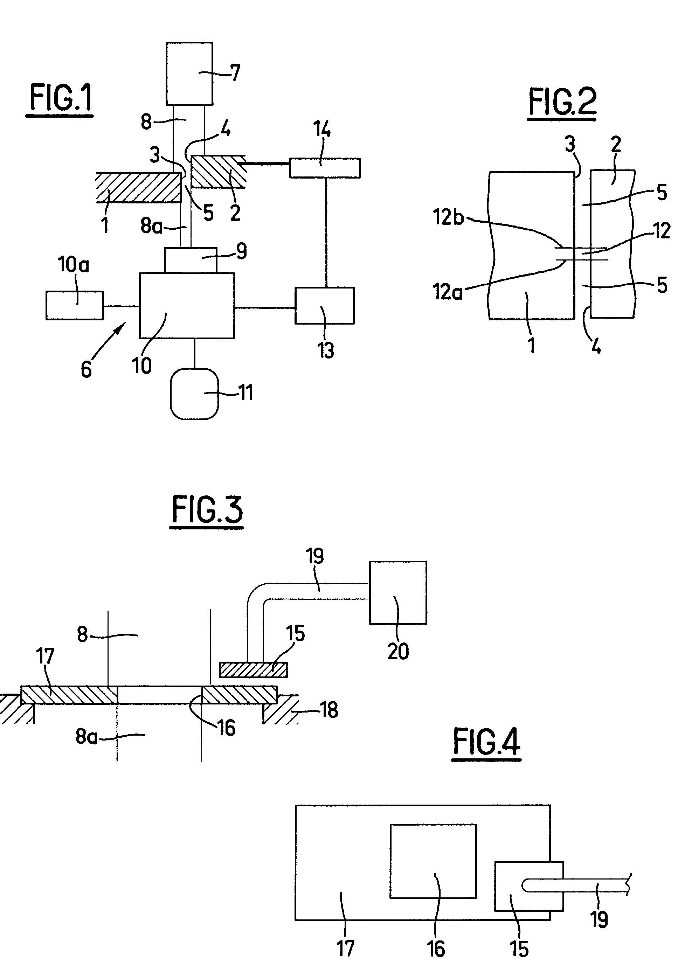

En se reportant aux figures 1 et 2, on voit qu'on a représenté deux pièces plates parallèles 1 et 2 qui présentent des bords 3 et 4 adjacents formant entre eux une fente 5. Dans l'exemple, les pièces 1 et 2 sont légèrement décalées dans le sens de leur épaisseur et leurs bords 3 et 4 sont parallèles. Ces derniers pourraient cependant être inclinés l'un par rapport à l'autre.

Le dispositif optique de détermination de position, repéré d'une manière générale par la référence 6, comprend un dispositif 7 d'émission d'un faisceau de lumière parallèle 8, de préférence une lumière blanche afin d'éviter les phénomènes de diffraction.

A distance du dispositif d'émission 7 et dans le faisceau de lumière parallèle 8 qu'il émet, le dispositif 6 comprend une caméra 9 qui présente des moyens pour numériser point par point l'image captée ainsi que des moyens de comparaison 10 qui sont par exemple reliés à un écran de visualisation 11.

Les pièces 1 et 2 sont disposées perpendiculairement au faisceau de lumière parallèle 8 émis par le dispositif d'émission 7. La fente 5 est disposée dans ce faisceau 8 dont la largeur est supérieure à la largeur de cette fente 5. Il s'ensuit qu'une partie du faisceau émis 8 traverse la fente 5 et le faisceau traversant 8a est capté par la caméra 9.

Dans une zone sélectionnée 12 de la fente 5, par exemple délimitée par deux lignes parallèles 12a et 12b perpendiculaires à la fente 5 et espacées dans le sens longitudinal de cette dernière, ces lignes 12a et 12b étant par exemple fixées à l'aide d'un organe d'introduction de données 10a, le moyen de comparaison 10 compare les niveaux d'intensité des pixels à une valeur déterminée, permettant ainsi d'obtenir des niveaux 1, respectivement 0, dans la zone 12 de la fente 5 et des niveaux 0, respectivement 1, de part et d'autre des bords 3 et 4 des pièces 1 et 2 et de part et d'autre des lignes 12a et 12b.

En conséquence, on peut voir, sur l'écran de visualisation 11, une tache claire correspondant à la zone 12, entourée d'une zone sombre. L'intensité lumineuse du faisceau traversant 8a dans la zone 12 peut en conséquence être qualifiée ou quantifiée par le nombre de pixels à l'état 1. Ayant préalablement mémorisé, à l'aide de l'organe d'introduction de données 10a, le nombre de pixels correspondant à un écart déterminé entre les bords 3 et 4 de pièces 1 et 2, on peut calculer l'écart réel entre ces bords proportionnellement. Ce mode permet en fait de transformer l'analyse de l'intensité du faisceau traversant en une analyse de surface.

Le dispositif 10 peut être associé à un organe de calcul de déplacement 13 qui permet de calculer, en fonction du nombre de pixels correspondant à l'écart réel séparant les bords 3 et 4 des pièces 1 et 2 , une course à effectuer pour que cet écart soit égal à une valeur fixée, par exemple la valeur déterminée indiquée plus haut. Cet organe de calcul peut alors fournir une instruction à un organe de déplacement 14 par exemple de la pièce 2 afin que ce dernier déplace cette pièce pour que l'écart entre les bords 3 et 4 des pièces 1 et 2 soit amené à la valeur fixée, à laquelle correspond une largeur du faisceau traversant 8a. Cet organe de déplacement 14, de structure connue, peut permettre une translation et/ou une rotation de la pièce 2.

Si on sélectionne deux zones 12 espacées le long de la fente 12, il est alors possible de régler les pièces 1 et 2 l'une par rapport à l'autre de telle sorte que leurs bords 3 et 4 forment un angle déterminé, les nombres de pixels associés aux deux zones 12 devant être pour celà dans un rapport déterminé.

En se reportant maintenant aux figures 3 à 10, on va maintenant décrire les différentes phases opératoires en vue d'insérer une puce 15 dans un orifice traversant 16 d'un substrat 17 en forme de plaquette, mettant en oeuvre le dispositif optique de détermination de position 6 décrit précédemment en référence aux figures 1 et 2.

Dans l'exemple, la puce 15 est rectangulaire et l'orifice traversant 16 est également rectangulaire mais légèrement plus grand que la puce 15 de telle sorte que cette dernière peut être introduite à l'intérieur en laissant un léger jeu tout autour.

Comme on l'a représenté uniquement sur la figure 3, le substrat 17 est disposé horizontalement sur un support 18 de telle sorte que le faisceau de lumière parallèle 8 émis par le dispositif d'émission 7, qui est place au-dessus du substrat 17, s'étende perpendiculairement à ce substrat et recouvre complètement son ouverture 16, la caméra 9 étant disposés en-dessous du substrat 17 et pouvant recevoir complètement le faisceau 8a traversant l'ouverture 16 dans son entier.

La puce 15 est portée par en-dessus grâce à un tube 19 d'aspiration monté sur un dispositif de déplacement 20, d'un type connu adapté, pour déplacer la puce 15 horizontalement au-dessus du substrat 17, verticalement et en rotation. Ce dispositif de déplacement 20 correspond à l'organe de déplacement 14 et est relié aux moyens de calcul 13.

Comme on le voit sur les figures 3 et 4, la puce 15 qui est par exemple prise par le suceur 19 à une station d'attente, est avancée grâce au dispositif de déplacement 20 pour venir au-dessus du substrat 17. Tant que la puce 15 n'entre pas dans le faisceau de lumière parallèle émise 8, la caméra voit toute l'ouverture 16 à laquelle est associé un nombre déterminé de pixels à l'état 1 visible sur l'écran 11.

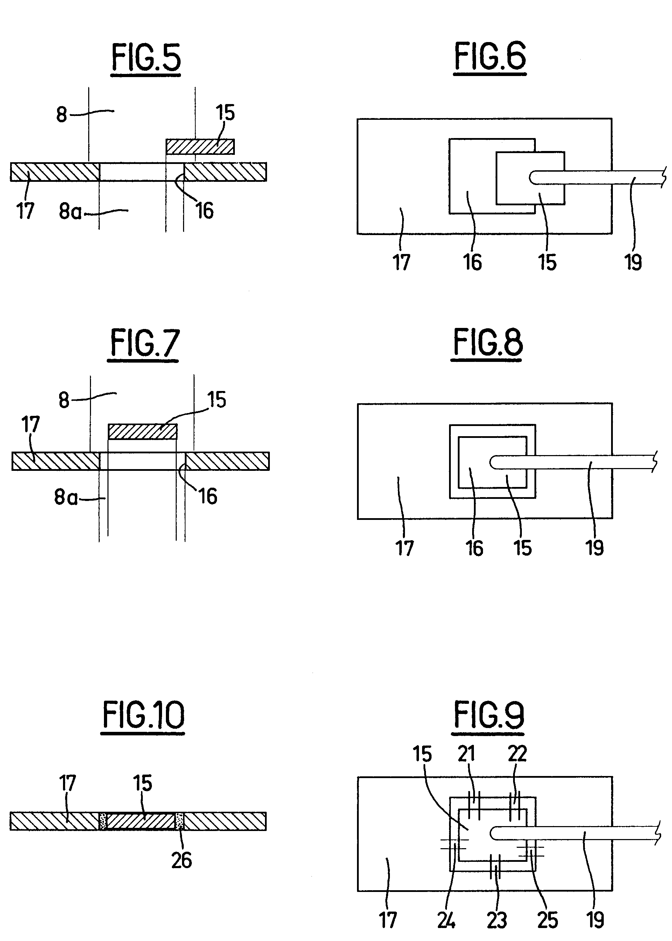

Le dispositif de déplacement 20 déplaçant la puce 15 en direction de l'ouverture 16, elle vient à pénétrer dans le faisceau de lumière parallèle émis 8 comme le montre les figures 5 et 6. Ce faisant, la surface en section du faisceau traversant 8a vient à se réduire et le nombre de pixels à l'état 1 qui est associé à cette surface diminue.

En continuant de déplacer la puce 15 grâce au dispositif de déplacement 20 vers l'ouverture 16, elle arrive à se retrouver complètement en face de cette dernière comme le montre les figures 7 et 8. Cette position recherchée peut être détectée par le dispositif de mesure 6 car, dans cette position, le nombre de pixels à l'état 1 atteint un minimum qui correspond à la différence en section entre la surface de l'ouverture 16 et la surface de la puce 15.

Les étapes de positionnement qui précèdent peuvent avantageusement être obtenues automatiquement grâce aux moyens de calcul 13 qui peuvent commander le dispositif de déplacement 20 par exemple pas à pas, en comparant à chaque pas le nombre de pixels à l'état 1 au nombre de pixels à l'état 1 obtenu lors du pas précédent, et celà jusqu'à ce que soit le nombre de pixels à l'état 1 devienne égal à un nombre de pixels déterminé préfixé et mémorisé correspondant au minimum précité, soit lorsque tout simplement le nombre de pixels à l'état 1 atteint une valeur qui ne change pas et qui correspond à ce minimum précité. Le faisceau 8a est alors annulaire.

La puce 15 étant en face de l'ouverture 16 du substrat 17, il s'agit maintenant de la mettre dans une position telle que l'espace entre sa périphérie et la paroi de l'ouverture 16 soit de préférence constant tout autour.

Pour celà, on peut avantageusement utiliser le procédé décrit en référence aux figures 1 et 2.

Le long de deux bords adjacents respectivement de la puce 15 et de l'ouverture 16, on sélectionne deux zones 21 et 22, et le long des deux bords qui leur sont opposés de la puce 15 et de l'ouverture 16, on sélectionne une zone 23. De préférence, ces zones 21 , 22 et et 23 présentent des largeurs dans le sens des bords précités égales.

On sélectionne également des zones 24 et 25, de préférence de même largeur, le long respectivement des deux autres bords de la puce 15 et du substrat 17.

En appliquant l'automatisme décrit précédemment en référence aux figures 1 et 2, l'organe de calcul 13 peut alors commander le dispositif de déplacement 20 de manière à amener la puce 15 dans une position telle que les distances entre les quatre bords de la puce 15 et les quatre bords de l'ouverture 16 soient égaux, la puce 15 étant alors centrée.

Naturellement, il est possible d'effectuer ce réglage de manière approximative en commandant manuellement pas à pas, le dispositif de déplacement 20 et en observant les zones 21 à 25 sur l'écran 11.

La puce 15 étant centrée en face de l'ouverture 16, cette puce 15 peut alors être engagée grâce au dispositif de déplacement 20, par déplacement vertical vers le bas, dans l'ouverture 16 du substrat 17. Cette insertion étant effectuée, on peut procéder à la vérification de l'écart entre la paroi périphérique de la puce 15 et la paroi périphérique de l'ouverture 16 et éventuellement corriger sa position de la même manière que précédemment par observation des zones 21 à 25.

Dans une autre manière de procéder, on pourrait amener la puce au-dessus de l'ouverture 15, l'engager dans cette ouverture et faire alors son positionnement par rapport aux parois de cette ouverture.

La puce 15 se trouvant en bonne position dans l'ouverture 16 du substrat 17, on peut procéder à son scellement en introduisant entre sa périphérie et la paroi de l'ouverture 16 une matière de scellement 26 comme on le voit sur la figure 10. Ce scellement étant fait, on libère le tube d'aspiration 19 qui lâche la puce 15 et qui peut alors être emmené par le dispositif de déplacement 20 afin de procéder à la mise en position et au scellement d'une autre puce dans une autre ouverture du substrat 17.

Il peut par ailleurs être envisagé d'insérer dans une même ouverture 16 d'un substrat 17 plusieurs puces 15 qui seraient disposées de manière adjacente, en laissant un espace déterminé afin de procéder à leur scellement. Le mode opératoire décrit précédemment peut avantageusement être utilisé à cet effet simplement en adaptant les écarts dans les zones précitées aux positionnements souhaités pour chacune des puces et en effectuant des calculs d'écarts éventuellement uniquement sur trois côtés de chacune des puces.

La présente invention ne se limite pas aux exemples ci-dessus décrits. Bien des variantes de réalisation sont possibles sans sortir du cadre défini par les revendications annexées.

## Revendications

1. Procédé optique de détermination de l'écart latéral de deux pièces (1, 2) présentant des bords adjacents (3, 4) formant une fente (5), caractérisé par le fait qu'il consiste :
- à émettre au travers de ladite fente (5), par un côté de cette dernière, un faisceau de lumière parallèle (8),
- à capter les faisceaux (8a) issus dudit faisceau de lumière parallèle et traversant au moins deux zones (12) de ladite fente, par l'autre côté de cette dernière,
- et à comparer l'intensité lumineuse des faisceaux traversant lesdites zones à une valeur déterminée, de manière à obtenir ou fournir les écarts entre les bords (3,4) desdites pièces (1, 2) dans lesdites zones (12).

2. Procédé selon la revendication 1, caractérisé par le fait qu'il consiste à déplacer lesdites pièces l'une par rapport à l'autre de telle sorte que 1 l'intensité lumineuse desdits faisceaux traversant lesdites zones soit dans un rapport déterminé.

3. Procédé optique de positionnement d'une première pièce (15) en face ou dans une ouverture (16) ménagée dans une seconde pièce (17), caractérisé par le fait qu'il consiste :
- à émettre un faisceau de lumière parallèle (8) au travers de ladite ouverture (16) de la deuxième pièce (17), par un côté de cette dernière, et couvrant cette ouverture,
- à capter le faisceau lumineux (8a) traversant ladite ouverture, par l'autre côté de ladite seconde pièce,
- à déplacer lesdites pièces l'une par rapport à l'autre de manière à amener ladite première pièce (15) au-dessus de l'ouverture (16) de la deuxième pièce (17),
- à comparer au fur et à mesure de ce déplacement l'intensité du faisceau lumineux traversant ladite ouverture, entre le bord de cette dernière et le bord de ladite première pièce,
- et à stopper ce déplacement lorsque l'intensité dudit faisceau lumineux traversant est égal à une valeur déterminée.

4. Procédé selon la revendication 3, caractérisé par le fait qu'il consiste à stopper le déplacement précité lorsque l'intensité du faisceau lumineux traversant atteint une valeur minimum.

5. Procédé selon l'une des revendications 3 et 4, caractérisé par le fait qu'il consiste, dans une étape ultérieure, à engager la première pièce (15) dans l'ouverture (16) de la deuxième pièce (17).

6. Procédé selon l'une quelconque des revendicatons 3 à 5, caractérisé par le fait qu'il consiste à régler la position de la première pièce par rapport à la deuxième pièce en mettant en oeuvre le procédé selon l'une des revendications 1 et 2.

7. Procédé selon la revendication 6, caractérisé par le fait qu'il consiste à sélectionner les zones précitées (21, 23) dans des portions opposées de la fente séparant la première et la seconde pièce.

8. Procédé selon l'une quelconque des revendications 3 à 7, caractérisé par le fait qu'il consiste à émettre un faisceau de lumière parallèle (8), parallèlement à l'axe de ladite ouverture (16).

9. Procédé selon l'une quelconque des revendications précédentes, caractérisé par le fait qu'il consiste à effectuer les comparaisons précitées par comptage de pixels, dont les signaux respectifs associés sont supérieurs, ou inférieurs, à une valeur déterminée, issus de l'image du faisceau traversant précité captée et numérisée, les comparaisons étant effectuées successivement au fur et à mesure des déplacements successifs desdites pièces l'une par rapport à l'autre.

10. Dispositif pour la mise en oeuvre du procédé selon l'une quelconque des revendications 1 à 9, caractérisé par le fait qu'il comprend
- des moyens (7) pour émettre le faisceau (8) de lumière parallèle précité,
- des moyens (9) pour sélectionner lesdites zones (12) et capter les faisceaux traversants précités (8a) traversant ces zones,
- des moyens de comparaison (10) des signaux d'intensité desdits faisceaux lumineux traversants.

11. Dispositif selon la revendication 10, caractérisé par le fait qu'il comprend des moyens (20) pour déplacer lesdites pièces l'une par rapport à l'autre, ces moyens de déplacement étant soumis auxdits moyens de comparaison (10).

12. Dispositif selon l'une des revendications 10 et 11, caractérisé par le fait que lesdits moyens pour capter les faisceaux traversants précités comprennent une caméra (9) présentant des moyens pour numériser l'image captée et que lesdits moyens de comparaison (10) comprennent des moyens de sélection de pixels et de comptage des pixels dont le signal associé est supérieur, ou inférieur, à une valeur déterminée.

13. Application du procédé selon l'une quelconque des revendications 1 à 9 ou du dispositif selon l'une quelconque des revendications 10 à 12, à l'insertion d'au moins une puce dans une ouverture ménagée dans un substrat.
